# EUROPÄISCHE PATENTSCHRIFT

(11) **EP 1 960 556 B1**
(45) Veröffentlichungstag und Bekanntmachung des Hinweises auf die Patenterteilung: **10.09.2014**
(21) Anmeldenummer: 06827957.9
(22) Anmeldetag: 18.12.2006
(51) Int. Cl.: C21B 3/04, C22B 5/10, C22B 7/02, C22B 7/04, C22B 19/30, C22C 9/00

(54) **VERFAHREN ZUM AUFARBEITEN VON METALLURGISCHEN STÄUBEN ODER SCHLEIFSTÄUBEN SOWIE VORRICHTUNG ZUR DURCHFÜHRUNG DIESES VERFAHRENS**
METHOD FOR REPROCESSING METALLURGICAL DUST OR GRINDING DUST, AND APPARATUS FOR CARRYING OUT SAID METHOD
PROCÉDÉ DE RETRAITEMENT DE POUSSIERES METALLURGIQUES OU DE POUSSIERES DE POLISSAGE, ET DISPOSITIF POUR LA MISE EN OEUVRE DE CE PROCÉDÉ

(30) Priorität: 16.12.2005 AT 20202005; 01.08.2006 AT 12972006
(43) Veröffentlichungstag der Anmeldung: 27.08.2008
(73) Patentinhaber: SGL Carbon SE, 65201 Wiesbaden (DE)
(72) Erfinder: EDLINGER, Alfred, 6780 Bartholomäberg (AT)
(86) Internationale Anmeldenummer: PCT/AT2006/000524
(87) Internationale Veröffentlichungsnummer: WO 2007/068025

(56) Entgegenhaltungen:
- EP-A- 1 591 546
- EP-A2- 0 572 769
- WO-A-2005/094153
- WO-A2-02/36834
- AT-B- 411 363
- CH-A5- 618 107

## Beschreibung

Die Erfindung bezieht sich auf ein Verfahren zum Aufarbeiten von metallurgischen Stäuben oder Schleifstäuben, insbesondere Konverter- und Lichtbogenofenstäuben aus der Stahl-oder Edelstahlerzeugung, bei welchem die Stäube in einem Schmelzbrenner mit Sauerstoff unter oxidierenden Bedingungen verbrannt und verschlackt werden sowie auf eine Vorrichtung zur Durchführung dieses Verfahrens.

Aus der AT 411363 B ist eine Einrichtung zum Schmelzen von Stäuben bekannt geworden, bei welcher Stäube axial und Trägergas tangential in eine Misch- und Dosiereinrichtung eingebracht werden, wobei die Misch- und Dosiereinrichtung über eine im wesentlichen axial gerichtete Austragsöffnung mit einer Brennkammer verbunden ist. Eine derartige Ausbildung eines Schmelzbrenners eignet sich in besonders guter Weise zur Aufarbeitung von Feststoffpartikeln und insbesondere von Stäuben wie beispielsweise Stahlwerksstäuben, bei welchen unter oxidierenden Bedingungen in der Folge Schmelzen gebildet werden. Beim Betrieb derartiger Schmelzbrenner konnte gezeigt werden, dass beim Einsatz von Stahlwerksstäuben und insbesondere Elektroofenstäuben mit hohem Zinkanteil Zinkoxid in der beim Verbrennen gebildeten Schlacke verbleibt. Die Staubbrenner eignen sich dabei auch für den Einsatz von abrasivem Rohmaterial, wobei in der Folge durch Ausbildung eines entsprechenden Dralls in der Brennkammer die Ablagerung aggressiver Schmelzen an den Kammerwänden verhindert werden kann und insgesamt ein wesentlich geringerer Verbrauch an feuerfestem Material auftritt, um einen sicheren Betrieb zu gewährleisten.

Neben Stahlwerkstäuben, welche einen problematischen Reststoff in der Stahlindustrie darstellen, ist auch eine Reihe anderer staubförmiger Reststoffe, wie beispielsweise Stäube aus der Nichteisenmetallurgie, Müllverbrennungsstäube oder Schleifstäube nicht ohne weiteres deponiefähig oder enthält eine hohe Menge an Wertstoffen, deren Rückgewinnung wirtschaftlich sinnvoll erscheint.

Für die Rückgewinnung insbesondere von Zink wurde in der EP 1591546 A1 bereits vorgeschlagen, die Stäube mit Trägergas in einer Brennkammer unter oxidierenden Bedingungen einzuschmelzen, wobei aus der Brennkammer flüchtige Halogenide abgezogen wurden um in der Folge die von Halogeniden weitestgehend freie oxidische Schmelze über einem Eisenbadreaktor mit einem entsprechenden Kohlenstoffgehalt zu reduzieren. Eine derartige Reduktion über einem Eisenbad führt naturgemäß zur Umsetzung des Badkohlenstoffes mit dem Sauerstoff der reduzierbaren Oxide, wobei Kohlenmonoxid gebildet wird. Bei entsprechend flüchtigen Metallen wie z.B. Zink gelangt naturgemäß auch Zink in die Dampfphase, sodass eine Dampfphase enthaltend elementares Zink und Kohlenmonoxid gebildet wird. Beim Kondensieren einer derartigen Dampfphase zum Zwecke der Rückgewinnung von Zink entstehen aber je nach Gleichgewichtsbedingungen auch mehr oder minder große Anteile von Kohlendioxid aus der Reaktion von Kohlenmonoxid und Kohlenstoff und es kann daher insgesamt bereits in dieser Phase zu einer teilweisen Oxidation unter Ausbildung von elementarem Zink und Zinkoxid kommen. Weiters ergibt sich aufgrund von Gleichgewichtsverschiebungen zwischen Kohlenmonoxid und Kohlendioxid auch ein mehr oder minder großer Anteil von Russ, welcher das erhaltene Kondensat bzw. Sublimat verunreinigt. Schließlich muss bei entsprechend hoher Menge an Kohlenmonoxid auch diese Gasmenge entsprechend gekühlt werden, um die Abtrennung von Zink bzw. Zinkoxid zu ermöglichen. Eine Nachverbrennung von Kohlenmonoxid in Anwesenheit der Zinkphase scheidet nicht zuletzt deshalb aus, weil eine derartige Nachverbrennung über dem Eisenbad zu einer neuerlichen Rückverschlackung des Zinkoxids führen würde, sodass weder die fühlbare Wärme noch die chemische Reaktionswärme des Kohlenmonoxids ausreichend sinnvoll genutzt werden kann.

In der WO 02/36834 A2 wird ein Verfahren zum Verwerten von eisen- und schwermetallhältigen Reststoffen offenbart, welche zusammen mit einem Reduktionsmittel sowie Sauerstoff und/oder sauerstoffangereicherter Luft in einen Schmelzzyklon eingebracht, darin verwirbelt und gezündet werden, in dem die Reststoffe aufgeschmolzen werden sowie flüchtige Schwermetalle reduziert und verdampft werden, bevor die Gase und die Schmelze aus dem Schmelzzyklon in ein unmittelbar gekoppeltes Abscheidegefäß überführt werden, in welchem eine Trennung von Schmelze und Gasen erfolgt, und die Schmelze in ein von dem Abscheidegefäß getrenntes metallurgisches Gefäß überführt wird. Die verdampften Schwermetalle können außerhalb des Abscheidegefäßes oxidiert werden.

Aus der WO 2005/094153 A1 ist eine Vorrichtung zum Oxidieren, Reduzieren, Kalzinieren, Sintern oder Schmelzen von Stäuben bekannt, welche einen Dosierzyklon, eine Brennkammer und eine Lanze für das Einstoßen von Brennstoffen aufweiset.

In der CH 618 107 A5 wird ein Verfahren zur elektroinduktiven Erwärmung eines Koksbetts offenbart, welches zur Wiedergewinnung von leichtflüchtigen Metallen bzw. Metallverbindungen aus einer Schmelze eingesetzt werden können soll. Die Metalle können dabei in fester oder flüssiger Form oder in Form ihrer Oxide wiedergewonnen werden.

Die Erfindung zielt nun darauf ab, ein Verfahren der eingangs genannten Art dahingehend weiterzubilden, dass die Energiebilanz verbessert wird und unmittelbar hochreines zinkoxid abgetrennt werden kann und gleichzeitig bei der Reaktion mit Kohlenstoff gebildetes Kohlenmonoxid gesondert verwertet werden kann.

Zur Lösung dieser Aufgabe besteht das erfindungsgemäße Verfahren der eingangs genannten Art im wesentlichen darin, dass die gebildete Schlacke in einen induktiv beheizten Reduktionsofen mit einer Koksschüttung eingebracht wird und dass bei der Reduktion der Schlacke gebildetes Kohlenmonoxid gemeinsam mit Zn-Dampf am Kopf des Reduktionsofens als Gas abgezogen wird, worauf das Gas mit Wasser oder Wasserdampf unter Bildung von ZnO und Wasserstoff reformiert wird und nach Abscheiden des ZnO dem Schmelzbrenner rückgeführt wird. Dadurch, dass die gebildete Schlacke bzw. Zwischenschlacke in einen Reduktionsofen mit einer Koksschüttung eingebracht wird, erfolgt unmittelbar bei der Aufgabe der Schmelze auf die Koksschicht eine entsprechende Umsetzung, bei welcher Kohlenmonoxid gebildet wird. Der beim Schmelzen gebildete und gasförmig ausgetragene Zinkdampf kann nun gemeinsam mit dem Kohlenmonoxid unmittelbar an der Stelle, bei welcher eine explosionsartige Umsetzung der Oxide mit der glühenden Kohle erfolgt, abgezogen werden, wobei dieser am Kopf des Reduktionsofens abgezogene Zinkdampf sowie das gebildete Kohlenmonoxid entsprechend abgekühlt werden müssen. Eine besonders effiziente Abkühlung bei gleichzeitiger chemischer Umsetzung wird nun erfindungsgemäß dadurch erzielt, dass dieses Gas reformiert wird, wobei durch Eindüsen von Wasser oder Wasserdampf eine überaus rasche Abkühlung zu feinkristallinem Zinkoxid vorgenommen wird. Die Reaktion verläuft endotherm und es erfolgt eine Abkühlung auf ca. 600° C.

Bedingt durch diese überaus rasche Abkühlung mit Wasser oder Wasserdampf werden auch störende Russeinschlüsse (C + H₂O = CO + H₂) mit Sicherheit vermieden und es wird hochreines, überaus feinkörniges Zinkoxid gebildet, welches nach entsprechender weiterer Abkühlung in einfacher Weise aus dem Gas abgetrennt werden kann. Das verbleibende, von Zinkoxid gereinigte Kohlenmonoxid wird erfindungsgemäß heuerlich als Brennstoff eingesetzt und zu dem Schmelzbrenner rückgeführt Bei der Umsetzung von Zink und Kohlenmonoxid mit Wasser bzw. Wasserdampf wird nun gleichzeitig Wasserstoff gebildet, wodurch ein Gas mit besonders hohem Heizwert gebildet wird, welches die Energiebilanz des Verfahrens wesentlich verbessert. Insgesamt wird somit neben hochreinem Zinkoxid gleichzeitig ein Brenngas bereitgestellt, welches sich durch einen hohen Heizwert auszeichnet.

Mit Vorteil wird das erfindungsgemäße Verfahren so durchgeführt, dass an der Aufgabestelle der Charge in den Schmelzbrenner Gase zur Ausbildung einer, Wirbelschicht eingestoßen werden, wobei die Charge aus der Wirbelschicht über einen eine Brennerlanze umgebende Ringspalt in die Brennkammer eingetragen wird. An dieser Aufgabestelle bzw. Übergabestelle, bei welcher die Charge in die Brennkammer verbracht wird, wird auf diese Weise die Möglichkeit geschaffen, eine homogene Verwirbelung auszubilden, sodass die Charge in der Folge auch homogen in der Brennkammer verbrannt werden kann. Die Homogenisierung der Charge kann in einem Dosierkonus erfolgen, wobei bei entsprechend radialem Einstoss von Sekundärsauerstoff bzw. Inertgasen eine entsprechend stabile Wirbelschicht im Aufgabekonus gewährleistet werden kann.

Der Reduktionsofen muss aufgrund der chemischen Umsetzung von Koks mit den schmelzflüssigen Oxiden nachchargiert werden und es muss jeweils Koks neuerlich aufgegeben werden. Eine besonders effiziente Vorwärmung dieses aufzugebenden Kokses kann dadurch erzielt werden, dass das am Kopf des Reduktionsofens abgezogene Gas im Gegenstrom zu dem dem Reduktionsofen zugeführten Koks geführt wird.

In besonders einfacher Weise kann die Koksschüttung des Reduktionsofens auf Temperaturen über 1480° C induktiv beheizt werden.

Neben der explosionsartigen Umsetzung der Metalloxide beim Auftreffen auf die glühende Kohle, bei welcher auch Zinkdämpfe mit dem gebildeten Kohlenmonoxid ausgetragen werden, wird auch an nachfolgenden Stellen des Koksbetts der Schüttung eine weitere reduktive Umsetzung vorgenommen, welche zur Ausbildung von Kohlenmonoxid führt. Dieses weitere Kohlenmonoxid ist aber bereits weitestgehend frei von Zinkdämpfen, und es wird mit Vorteil das erfindungsgemäße Verfahren so durchgeführt, dass weiteres im Reduktionsofen gebildetes Gas an einer vom Kopf des Reduktionsofens verschiedenen nachfolgenden Stelle abgezogen wird.

Durch die induktive Beheizung der Koksschüttung des Reduktionsofens wird im übrigen auch die Möglichkeit geschaffen, durch Zufuhr geeigneter sauerstoffhaltiger Gase zu einem derartigen Reduktionsofen das Reduktionspotential in unterschiedlichen Ebenen gesondert einzustellen und zu regeln, sodass optimale Bedingungen für die jeweilige Reduktion sichergestellt werden.

Im Falle des Einsatzes von pyrophoren Stäuben, wie sie beispielsweise im Fall von LD-Konverterstäuben, direkt reduziertem Eisenstaub, Feinerzen oder kohlenstoffhältigen Gichtgasstäuben aus dem Hochofen anzutreffen sind, kann in der Sekundärgasebene im Aufgabebereich mit Vorteil mit Inertgasen gearbeitet werden, da hier eine Sauerstoffeindüsung zur Erzielung der Wirbelschicht die Gefahr mit sich bringt, dass die Flamme in den Aufgabekonus rückschlägt. Es kann somit das an nachfolgenden Stellen abgezogene Gas, welches ja im wesentlichen aus Kohlenmonoxid besteht, bei Einsatz von pyrophoren Chargen in der Aufgabestelle der Stäube in den Schmelzbrenner über radiale Düsen zugeführt werden. An dieser Stelle können auch Kohlendioxid, überhitzter Wasserdampf oder Edelgase als Inertgas eingespeist werden. Das Eindüsen von Stickstoff bzw. stickstoffhältigen Gasen ist aber wegen der möglichen Bildung von Stickoxiden nicht vorteilhaft. Die über die radialen Düsen zugeführten Gase dienen der Fluidisierung und Vergleichmäßigung der Eduktstäube, welche in der Folge in den Brenner gelangen.

Um ein wirtschaftliches Temperaturniveau bei gleichzeitig hinreichend niederer Schlackenviskosität zu gewährleisten wird mit Vorteil so vorgegangen, dass die Schlacke durch Additive auf eine Schlackenbasizität CaO/SiO₂ von 0,6 bis 1,6 eingestellt wird. Eine derartige Schlacke ist bei Temperaturen zwischen 1480° C und 1700° C je nach Zusammensetzung entsprechend dünnflüssig, sodass sie sicher durch die Schüttung des Koksbettes abfließen kann. Zur Einstellung einer derartigen Schlackenbasizität kann eine Reihe von anderen Problemstoffen entsorgt werden, welche in der Folge im Reduktionsreaktor zu einem Metallregulus reduziert werden können. Mit Vorteil wird hierbei so vorgegangen, dass als Additive Stahlwerksschlacke, Walzwerkszunder, Elektroschlackenumschmelzverfahrensschlacken (ESU-Schlacken), Hochofenschlacken, Pfannenschlacken, Altglas, Feuerfestausbruch, Kraftwerksflugasche, Müllverbrennungsstaub, Gießereialtsand, getrocknete Hüttenschlämme und/oder Mergelstaub eingesetzt werden. Der Einsatz derartiger saurer Additive trägt dem Umstand Rechnung, dass stark basische Einsatzmaterialien nach der Reduktion von Metallen im Koksbettreaktor relativ hochschmelzendes CaO ausbilden, welches ansteift und zu einem Zufrieren führen könnte. Die den Stäuben zugemischten oder ggf. mit dem Koks stückig chargierten sauren Additive, und insbesondere SiO₂ oder Al₂O₃ haltigen Additive, können die Viskosität entsprechend absenken und auch im Koksbett unerwünschte Auswaschungen durch flüssigen Schlackenstrahl verhindern.

Die sauren Additive, wie z.B. SiO₂, Al₂O₃, B₂O₃ oder P₂O₅, bilden mit Zn entsprechende Salze und verhindern die Ausbildung schwer schmelzender ZnOₓ, FeₓO_{y}, die bei hohen Brennkammertemperaturen zerlegt werden und zu Zn-Verlusten führen können.

Die erfindungsgemäße Vorrichtung zur Durchführung dieses Verfahrens ist im wesentlichen dadurch gekennzeichnet, dass ein Dosierkonus mit einer Brennerlanze und einer Aufgabeeinrichtung für die Charge vorgesehen ist, welcher über einen Aufgabebereich mit verringertem Querschnitt über einen die Brennerlanze umgebenden Ringschlitz in einen Diffusor übergeht, dass die Brennkammer an den Diffusor anschließt und dass an eine bodenseitige Austragsöffnung der Brennkammer eine induktiv beheizte Kokssäule als Reduktionsofen angeschlossen ist, dessen kopfseitiges Ende wenigstens einen Anschluss für die Aufgabe von Kohle oder Koks und den Abzug von Kohlenmonoxid und Zn-Dampf aufweist, wobei die Vorrichtung ferner einen Reformer, welcher eine Leitung zur Zuführung des am Kopfende des Reduktionsofens als Gas abgezogenen Kohlenmonoxids und Zn-Dampfs aufweist und in den Wasser oder Wasserdampf eindüsbar ist, einen stromabwärts des Reformers angeordneten Filter zur Abscheidung von Zinkoxid sowie eine von dem Filter zu der Brennerlanze führende Leitung aufweist, über welche der Brennerlanze Kohlenmonoxid und Wasserstoff rückführbar sind, wobei zwischen dem Reduktionsofen und dem Reformer ein Heißstaubfänger zur Austragung von Kokspartikeln vorgesehen ist.. Dadurch, dass ein Dosierkonus vorgesehen ist, wird die Möglichkeit geschaffen, rund um die zentrale Brennerlanze und vor dem eigentlichen Aufgabebereich in den Brenner eine entsprechend stabile fluidisierte Zone auszubilden und eine Wirbelschicht bzw. ein Wirbelbett aufrecht zu erhalten. Der Aufgabebereich weist hierbei einen verringerten Querschnitt auf und bildet gemeinsam mit der Brennerlanze einen Ringschlitz aus, welcher in den Diffusor übergeht, wobei die Brennkammer unmittelbar an den Diffusor angeschlossen sein kann und selbst als Diffusor ausgebildet sein kann. Die Ausbildung ist hierbei mit Vorteil so getroffen, dass die Brennkammer mit sich konisch erweiternden Wänden ausgebildet ist, welche über einen Ringschlitz mit Austragsöffnungen für Verbrennungsgase in Verbindung stehen. Der unmittelbar anschlie-Bende Reduktionsofen erlaubt es, die Vorrichtung kompakt auszuführen, wobei ein kontinuierlicher Betrieb gewährleistet wird. Das in der ersten Stufe, nämlich der Brennkammer, oxidierend geschmolzene Material kann kontinuierlich in den induktiv beheizten Reduktionsofen eingebracht werden, wobei aufgrund der hohen Temperaturen Zinkdampf und Kohlenmonoxid am kopfseitigen Ende des Reduktionsofens abgezogen werden können. Eisenoxid sowie Nickel, Chrom und Vanadium werden entweder zu den Metallen reduziert oder als Karbide in den Regulus ausgetragen, welcher am Unterende des Reduktionsofens abgezogen werden kann.

Der Aufgabebereich mit verringertem Querschnitt kann hierbei als rohrförmige Mischkammer ausgebildet sein, wobei an dieser Stelle mit Vorteil die entsprechenden Sekundärdüsen in Form einer Ringdüse mit radialen Mündungen angeordnet sein können, um eine stabile Ausbildung einer Wirbelschicht bzw. eines Fließbettes zu gewährleisten. Die Ausbildung kann hierbei mit Vorteil so getroffen sein, dass der Aufgabebereich zwischen Dosierkonus und Brennkammer in einem ersten Teilbereich als Konfusor, in welchem die Brennerlanze unter Ausbildung eines Ringspalts mündet, in einem zweiten Teilbereich als rohrförmige Mischkammer und in einem anschließenden Teilbereich als Diffusor ausgebildet ist, wobei in diesem Bereich bevorzugt Sekundärdüsen für Verbrennungssauerstoff, Inertgase und/oder Kohlenmonoxid und/oder Kohlendioxid in radialer Richtung in den Aufgabebereich münden. Die Querschnitte und die Strömungsverhältnisse sollen dabei so gewählt sein, dass die Strömungsgeschwindigkeit hinreichend hoch ist, um eine Zündung im Bereich der Mischstrecke zu vermeiden. Über die primäre Brennstofflanze des Brenners wird somit in erster Linie Brennstoff und im Fall des reformierten Gases Kohlenmonoxid und Wasserstoff eingestoßen, wohingegen über die Sekundärdüsen Verbrennungssauerstoff in radialer Richtung eingeblasen wird. Bei Verwendung von pyrophoren Chargen müssen die über die Sekundärdüsen zur Ausbildung der Wirbelschicht eingedüsten Gase nicht nur radial eingestoßen werden sondern auch weitestgehend inert sein, um ein Rückschlagen in den Dosierkonus zu verhindern. Besonders vorteilhaft ist hier ein Einstoß in mehreren in Höhenrichtung aufeinander folgenden Ebenen, um die Ausbildung eines stabilen und homogenen Gemischs zu erzielen. Um einen homogenen Eintrag in den Schmelzbrenner sicherzustellen, ist die Ausbildung mit einem Konfusor, einem anschließenden Mischkammerbereich und einem Diffusor besonders vorteilhaft, um eine vollständige und rasche Schmelze zu erzielen.

In besonders vorteilhafter Weise ist der Reduktionsofen zweistufig ausgebildet, wobei er einen ersten induktiv beheizbaren rohrförmigen Abschnitt mit geringerem Querschnitt aufweist, an welchen am Kopf eine Gasleitung angeschlossen ist und einen zweiten induktiv beheizbaren Abschnitt mit größerem Querschnitt aufweist, an welchen eine weitere Abgasleitung oberhalb der Schütthöhe der Koksfüllung anschließt.

Ein besonders gleichmäßiger Eintrag der Charge in den Dosierkonus lässt sich dadurch verwirklichen, dass die Aufgabeeinrichtung als Feststoffeintrag mit einer Förderschnecke und einem die Förderschnecke umgebenden Rohr mit über die Achse des Rohres verteilten Durchbrechungen ausgebildet ist.

Die Erfindung wird nachfolgend anhand von in der Zeichnung schematisch dargestellten Ausführungsbeispielen einer für die Durchführung des erfindungsgemäßen Verfahrens besonders geeigneten Vorrichtung näher erläuterte In dieser zeigen Fig.1 eine schematische Darstellung einer zur Durchführung des Verfahrens geeigneten Vorrichtung, Fig.2 eine vergrößerte Darstellung eines Dosierkonus mit angeschlossener Brennkammer, Fig.3 eine spezielle Ausbildung eines nachgeschalteten Reduktionsofens schematisch im Schnitt und Fig.4 eine schematische Darstellung einer abgewandelten Ausbildung der erfindungsgemäßen Vorrichtung.

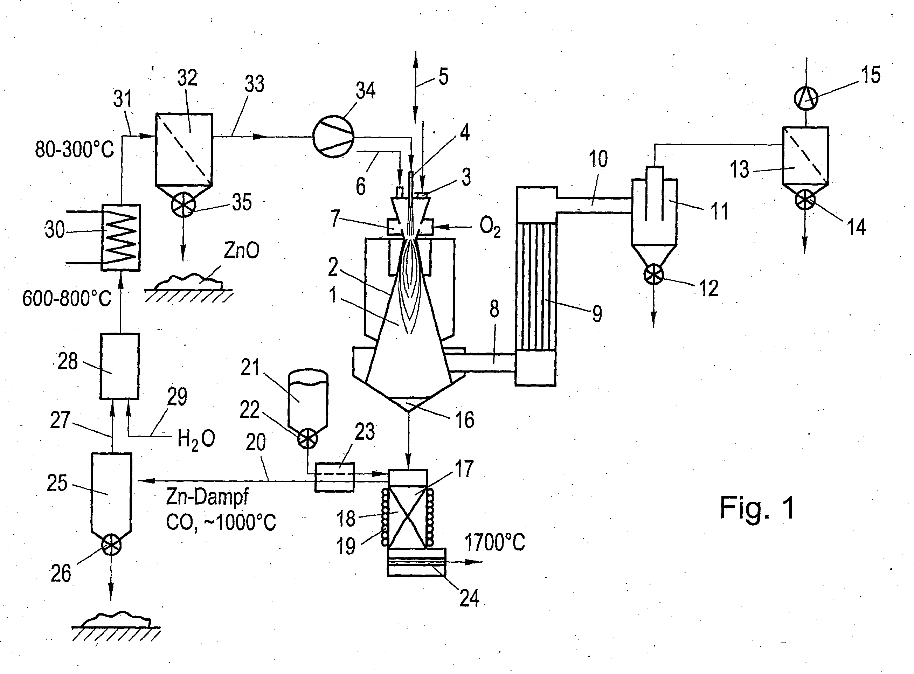

In Fig.1 ist mit 1 eine Brennkammer bzw. ein Schmelzbrenner bezeichnet, deren Wände 2 sich nach Art eines Diffusors konisch erweitern. Der Brennkammer 1 vorgeschaltet ist ein Dosierkonus 3, in welchem eine höhenverstellbare Lanze 4 in Richtung des Doppelpfeils 5 verschieblich geführt ist. Über die Lanze 4 werden Brennstoff und Verbrennungssauerstoff in die Brennkammer eingestoßen. Über die Leitung 6 wird die Charge aufgegeben. Mit 7 ist ein Ringkanal für das Aufbringen von Sekundärsauerstoff angedeutet, wobei an diesen Ringkanal 7 radiale Düsen 38 anschließen, welche im Inneren des Dosierkonus 3 eine Wirbelschicht bzw. ein Fließbett aufrechterhalten.

Die Verbrennungsabgase der Brennkammer 1 werden über die Leitung 8 abgezogen und über einen Kühler 9 geführt. Der Kühler 9 kann als rekuperativer Wärmetauscher ausgebildet sein. Über eine Leitung 10 gelangt das Gas anschließend zu einem Staubzyklon 11, aus welchem über eine Zellradschleuse 12 Refraktärstaub ausgetragen werden kann. Dieser Staub kann Substanzen wie vornehmlich Natrium, Wolfram, Molybdän, Chloride, Fluoride und Oxide enthalten.

Das den Staubzyklon 11 verlassende Gas gelangt in der Folge in einen Filter 13, in welchem Bleistaub, Chloride und Fluoride über eine Zellradschleuse 14 ausgetragen werden können. Das gereinigte Gas wird über ein Gebläse 15 abgezogen.

Die in der Brennkammer 1 gebildete Schmelze 16 wird einem Reduktionsofen 17 zugeführt, in welchem sich eine Koksschicht 18 befindet. Die Koksschicht 18 wird induktiv beheizt, wobei die Induktionsspule mit 19 bezeichnet ist. Das beim Auftreffen auf den glühenden Koks des Reduktionsreaktors bzw. Reduktionsofens 17 gebildete Kohlenmonoxid wird über eine Leitung 20 im Gegenstrom zu dem dem Ofen wieder zuzuführenden Koks geführt. Der Koks aus dem Bunker 21 wird nach Verlassen der Schleuse 22 in dem Gegenstromwärmetauscher 23 vorgewärmt und gelangt auf diese Weise in den Reduktionsofen 17.

Am Unterende des Reduktionsofens 17 werden der Metallregulus 24 und die ausreduzierte Schlacke abgezogen.

Das das Kopfende des Reduktionsofens 17 verlassende heiße zinkhältige Gas enthält neben Kohlenmonoxid in erster Linie Zinkdampf und wird bei Temperaturen bei ungefähr 1000° C abgezogen. Es gelangt zunächst in einen Heißstaubfänger 25, aus welchem über die Zellradschleuse 26 Kokspartikel ausgetragen werden können. Im Anschluss gelangt das heiße Gas über die Leitung 27 in einen Reformer 28, in welchem Wasser bzw. Wasserdampf über eine Leitung 29 eingedüst wird. Im Reformer wird nach der nachfolgenden Gleichung Zn + CO + H₂O = ZnO + CO + H₂ feinster Zinkoxidstaub gebildet und ein rasche Abkühlung vorgenommen. Die zinkoxidstaubhältige Gasströmung verlässt den Reformer 28 bei Temperaturen von etwa 600 - 800° C und gelangt in einen nachgeschalteten Kühler 30, in welchem beispielsweise auch Dampf erzeugt werden kann. Nach einer Abkühlung auf etwa 80 - 300° C gelangt das Gas über die Leitung 31 und einen Filter 32 über die Leitung 33 und ein Gebläse 34 zurück zur Brennerlanze 4. Dieses Gas enthält nach dem Abscheiden des Zinkoxidstaubs über die Zellradschleuse 35 nunmehr CO und H₂ und stellt ein hochwertiges Brenngas dar.

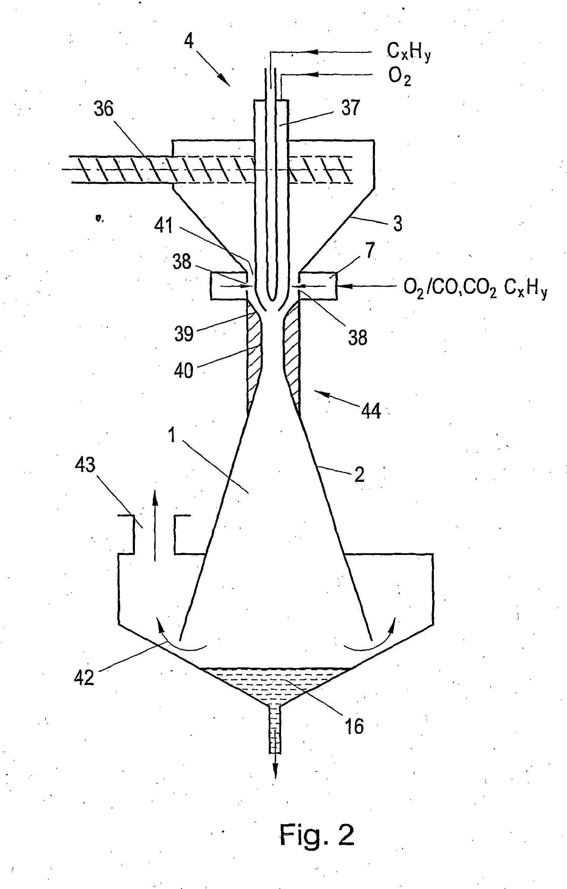

Bei der Darstellung nach Fig.2 sind die Brennkammer 1 und der Dosierkonus vergrößert dargestellt. In den Dosierkonus 3 mündet eine Förderschnecke 36, welche im Inneren des Dosierkonus 3 von einem Siebrohr umgeben ist, um auf diese Weise einen gleichmäßigen Eintrag der Charge in den Dosierkonus zu ermöglichen. Die Lanze 4 weist einen zentralen Kanal für Brenngas, beispielsweise Kohlenwasserstoffe, auf, wobei Verbrennungssauerstoff über den Mantel 37 der Lanze 4 zugeführt wird. Sekundärsauerstoff wird wiederum über den Ringkanal 7 und radiale Düsen 38 eingetragen, um im Inneren des Dosierkonus 3 eine entsprechend stabile Wirbelschicht aufrecht zu erhalten. Im Falle von pyrophoren Chargen wird in den Ringkanal 7 nicht Sauerstoff sondern Inertgas, und insbesondere CO oder CO₂ eingebracht, um ein Rückschlagen der Flamme in den Dosierkonus 3 zu verhindern.

Die Brennkammer 1 selbst ist wiederum mit sich nach Art eines Diffusors konisch erweiternden Wänden ausgebildet, wobei das Material aus dem Dosierkonus 3 über einen ersten Teilbereich, welcher als Konfusor 39 ausgebildet ist, und einem im wesentlichen zylindrischen Teilbereich, welcher eine Mischkammer 40 darstellt, mit der Flamme in die Brennkammer 1 ausgestoßen wird. Das Material gelangt hierbei über den Ringschlitz bzw. Ringspalt 41 aus dem Dosierkonus in die Brennkammer.

Am Unterende der Brennkammer 1 enden die Brennkammerwände 2 in einem Abstand von den unteren Wänden der Brennkammer 1. Die Schmelze 16 wird wiederum in der in Fig.1 angedeuteten Weise ausgetragen, wobei die Verbrennungsabgase hier in Richtung der Pfeile 42 zu einer Absaugöffnung 43 gelangen, über welche sie ausgetragen und in die in Fig.1 mit 8 angedeutete Leitung eingespeist werden können. Die sich konische erweiternden Wände 2 bilden unmittelbar im Anschluss an die Mischkammer 40 einen mit 44 schematisch angedeuteten Diffusor aus, in welchen sich bedingt durch die hohe Viskosität der Brennergase eine Kolbenströmung ausbildet. Im Bereich der radialen Drosselstelle, über welche das Gas die Brennkammer 1 verlässt, kann gleichzeitig auch ein Tröpfchen Rückfluss aus dem den eigentlichen Brenner umgebenden Ringkanalunterofen stattfinden.

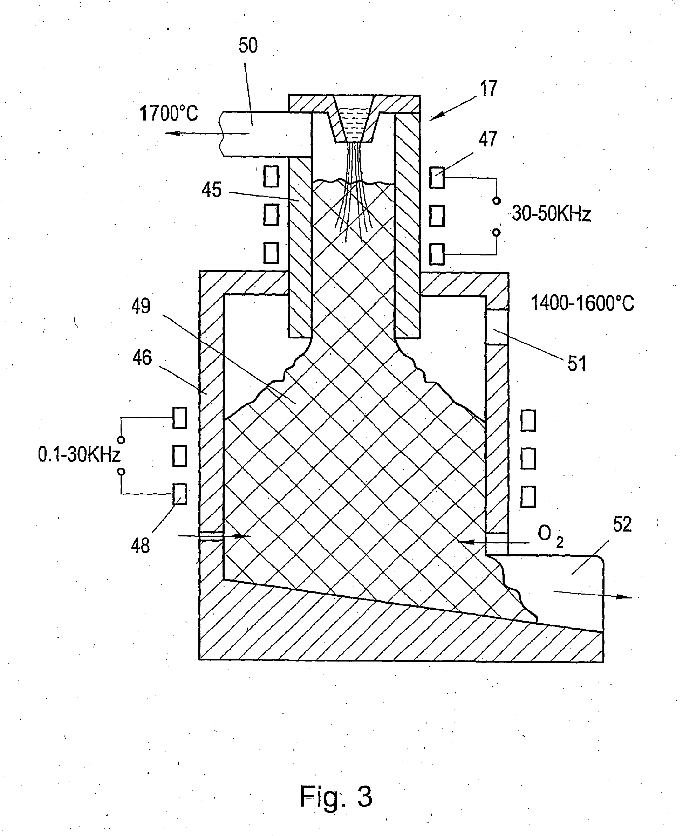

Bei der Darstellung nach Fig. 3 ist nun ein zweistufiger Reduktionsofen ersichtlich. Der Reduktionsofen ist wiederum mit 17 bezeichnet und weist zwei Teilbereiche auf. Der erste Teilbereich bzw. Abschnitt 45 weist einen gegenüber dem zweiten Teilbereich bzw. Abschnitt 46 geringeren Durchmesser auf, wobei die elektrischen Leiterspulen mit 47 und 48 bezeichnet sind. Im Bereich des kleineren Durchmessers kann mit höherer Frequenz angekoppelt werden und hier beispielsweise im Frequenzbereich zwischen 30 und 50 kHz gearbeitet werden, wohingegen im unteren Teilbereich des Reduktionsofens mit vergrößertem Durchmesser die Frequenz geringer gewählt werden kann und beispielsweise mit 0,1 - 30 kHz eingestellt sein kann. Mit 49 ist die Koksschüttung bezeichnet, und es sind hier an die beiden Teilbereiche gesonderte Abgasanschlüsse 50 und 51 ersichtlich. Im kopfseitigen Abgasanschluss 50 herrscht die vergleichsweise höchste Temperatur, wobei hier bei Temperaturen von etwa 1700° C Kohlenmonoxid gemeinsam mit Zinkdampf abgezogen wird und in der in Fig.1 schematisch erläuterten Weise weiterbehandelt wird.

Das schmelzflüssige und weiter reduzierte Material sinkt über die glühende Kokssäule ab und kann über den Abstich 52 ausgetragen werden. Auch in diesem unteren Teilbereich erfolgt noch eine entsprechende Reduktion und damit eine Umsetzung von schmelzflüssigen Metalloxiden mit glühendem Koks, sodass über die Leitung 51 weitestgehend reines Kohlenmonoxid bei Temperaturen zwischen 1400 und 1600° C abgezogen werden kann. Im zweiten Teilbereich erfolgt gegenüber dem ersten Teilbereich des Reduktionsofens eine wesentlich langsamere Reduktion, wobei hier Eisenoxide, Chromoxide, Vandiumoxide, u.dgl. reduziert bzw. zu Karbiden umgesetzt werden. Die explosionsartig rasche Reduktion bei der Aufgabe auf den entsprechend mechanisch höher belastbaren oberen Teilbereich 45 des Reduktionsofens führt zum raschen Austrag von dampfförmigem Zink und Kohlenmonoxid, wobei an dieser Stelle auch Heißkoks chargiert werden kann.

Über die gesonderten Abgasanschlüsse bzw. Abgasleitungen 50 bzw. 51 kann jeweils im Gegenstrom Koks chargiert werden.

In Abwandlung der Ausbildung nach Fig.3 kann der Abstich höher angeordnet werden, sodass sich am Fuß des Reduktionsofens ein Sumpf ausbildet. Die im Sumpf anfallende metallische Schmelze kann wiederum induktiv beheizt werden, wobei hier wesentlich geringere Frequenzen von unter 1 kHz eine entsprechende Ankoppelung sicherstellen (100 bis 600 kHz). Im Sumpf kann weitere metallurgische Arbeit geleistet werden, wobei entsprechend hohe Abstichtemperaturen gewählt werden können.

Bei entsprechend längerer Ausbildung des ersten rohrförmigen Teilbereichs. 45 kann dieser in die Koksschüttung 49 eintauchen und der dem zweiten Teilbereich 46 zugeführte Koks kann in dem den ersten Teilbereich 45 konzentrisch umgebenden Teil der Koksschichtung durch die heißen Reaktionsgase vorgewärmt werden.

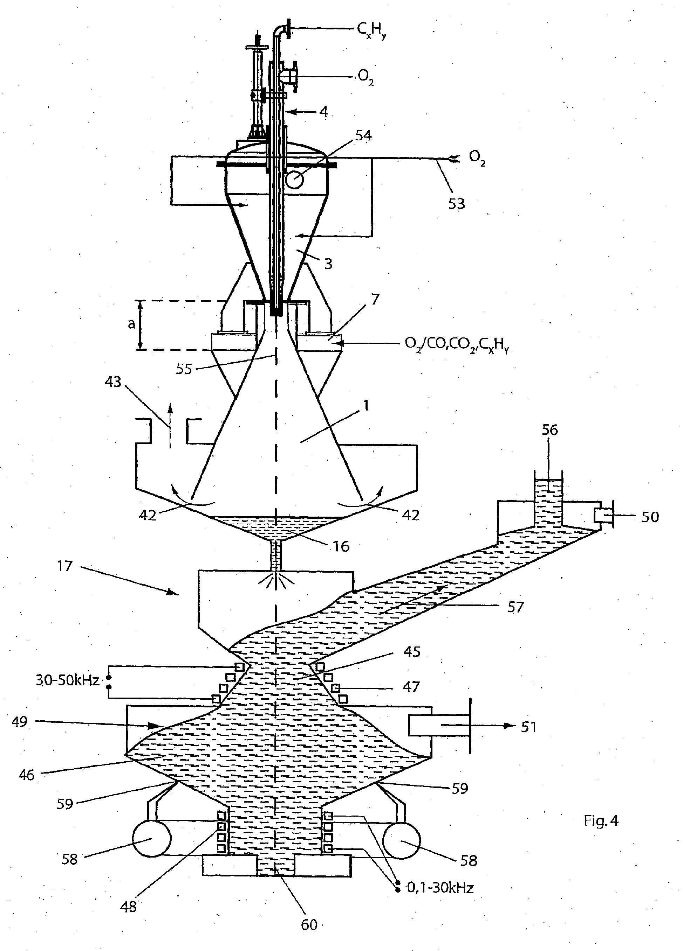

Bei der Darstellung nach Fig.4 wurden die in den Fig.2 und 3 gewählten Bezugszeichen für funktional gleiche Teile beibehalten. Über die Lanze 4 werden wiederum Brennstoff sowie Primärsauerstoffe eingestoßen, wobei nunmehr in den Dosierkonus 3 über eine Leitung 53 Sekundärsauerstoff über Sekundärdüsen 61 in verschiedenen Ebenen im wesentlichen tangential eingestoßen wird, um eine entsprechend stabile Durchmischung des zugeführten Staubs zu ermöglichen. Der Staub selbst wird über die Öffnung 54 zugeführt.

Im Anschluss an die Brennerlanze 4 befindet sich eine im wesentlichen zylindrische Mischkammer, welche in einen sich nach Art eines Diffusors erweiternden Bereich übergeht und in der Folge in die Brennkammer 1 mündet. Die Mischkammer erstreckt sich hierbei über eine definierte Strecke a, deren Länge so bemessen ist, dass die Strömungsgeschwindigkeit größer ist als die Zündgeschwindigkeit. Die Zündung selbst erfolgt somit erst am Übergang in die Brennkammer, wobei der Zündpunkt schematisch mit 55 angedeutet ist. Am Boden der Brennkammer 1 sammelt sich wiederum die Schmelze 16, welche anschließend dem Reduktionsofen 17 zugeführt wird. Dieser Reduktionsofen 17 selbst ist wiederum zweistufig ausgebildet, wobei der erste Teilbereich 45 wiederum kleineren Durchmesser als der zweite Teilbereich 46 aufweist. Die Koksschüttung ist wiederum mit 49 bezeichnet. Der erste Teilbereich kann beispielsweise mit höherer Frequenz im Frequenzbereich zwischen 30 und 50 kHz angekoppelt werden, wohingegen im abstichseitigen Endbereich mit niedrigeren Frequenzen, beispielsweise Frequenzen zwischen 0,1 und 30 kHz, gearbeitet werden kann. Über einen Anschluss 56 wird nun Koks für die Koksschüttung aufgegeben, wobei das bei der Reduktion gebildete Kohlenmonoxid in Richtung der Pfeile 57 im Gegenstrom zur Koksschüttung abgezogen werden kann. Gemeinsam mit diesem im Gegenstrom abziehenden Kohlenmonoxid werden auch Zinkdämpfe ausgetragen, welche über den Anschluss 50 abgezogen und ggf., wie zuvor beschrieben, reformiert werden können, um weiteres Brenngas auszubilden.

Im ersten Teilbereich 45 wird hierbei in erster Linie die Zinkreduktion vorgenommen, wobei die Zinkdämpfe gemeinsam mit dem gebildeten Kohlenmonoxid abgezogen werden. Im zweiten Teilbereich 46 wird im wesentlichen die Reduktion von Eisenoxiden bewirkt, wobei hier über eine Ringleitung 58 und Düsen 59 Sauerstoff eingeblasen werden kann, um die erforderliche Reduktionsarbeit zu leisten. Die Reduktion erfolgt hier durch Umsetzung des Sauerstoffs mit dem Kohlenstoff zu Kohlenmonoxid, wobei weitere Reduktionsarbeit, und insbesondere Reduktionsarbeit, mit welcher auch Chrom und Vanadium in Form von Carbiden in die Schmelze bzw. den Regulus eingetragen werden können, im Endbereich geleistet wird, an welchem Wechselstrom mit Frequenzen zwischen 0,1 bis 30 kHz angekoppelt ist. Der Abstich erfolgt nunmehr über die Öffnung 60, wobei unter diesen Abstich beispielsweise ein verfahrbarer Vorherd zur Trennung von Schlacke und Eisen angeschlossen werden kann. Im Inneren der Köksschichtung 49 bildet sich im Bereich der Mündung der Düsen 59 ein entsprechender Brennfleck aus, in dessen Bereich die Eisenreduktionsarbeit geleistet wird. Gebildetes Kohlenmonoxid aus dem Abgasanschluss 51 wiederum bei Temperaturen von etwa 1400 bis 1600° C abgezogen werden.

## Patentansprüche

1. Verfahren zum Aufarbeiten von metallurgischen Stäuben oder Schleifstäuben, insbesondere Konverter- und Lichtbogenofenstäuben aus der Stahl- oder Edelstahlerzeugung, bei welchem die Stäube in einem Schmelzbrenner mit Sauerstoff unter oxidierenden Bedingungen verbrannt und verschlackt werden, **dadurch gekennzeichnet, dass** die gebildete Schlacke in einen induktiv beheizten Reduktionsofen (17) mit einer Koksschüttung (49) eingebracht wird und dass bei der Reduktion der Schlacke gebildetes Kohlenmonoxid gemeinsam mit Zn-Dampf am Kopf des Reduktionsofens (17) als Gas abgezogen wird, worauf das Gas mit Wasser oder Wasserdampf unter Bildung von ZnO und Wasserstoff reformiert wird und nach Abscheiden des ZnO dem Schmelzbrenner (1) rückgeführt wird.

2. Verfahren nach Anspruch 1, **dadurch gekennzeichnet, dass** an der Aufgabestelle der Stäube in den Schmelzbrenner (1) Gase zur Ausbildung einer Wirbelschicht eingestoßen werden, wobei die Stäube aus der Wirbelschicht über einen eine Brennerlanze (4) umgebende Ringspalt (41) in die Brennkammer (1) eingetragen wird.

3. Verfahren nach Anspruch 1 oder 2, **dadurch gekennzeichnet, dass** das am Kopf des Reduktionsofens (17) abgezogene Gas im Gegenstrom zu dem dem Reduktionsofen (17) zugeführten Koks geführt wird.

4. Verfahren nach Anspruch 1, 2 oder 3 , **dadurch gekennzeichnet, dass** die Koksschüttung (49) des Reduktionsofens (17) auf Temperaturen über 1480° C induktiv beheizt wird.

5. Verfahren nach einem der Ansprüche 1 bis 4, dadurch gekenn-zeichnet, dass weiteres im Reduktionsofen (17) gebildetes Gas an einer vom Kopf des Reduktionsofens (17) verschiedenen nachfolgenden Stelle abgezogen wird.

6. Verfahren nach Anspruch 5, **dadurch gekennzeichnet, dass** das an einer nachfolgenden Stelle abgezogene Gas bei Einsatz von pyrophoren Chargen der Aufgabestelle der Stäube in den Schmelzbrenner (1) über radiale Düsen (38) zugeführt wird.

7. Verfahren nach einem der Ansprüche 1 bis 6, **dadurch gekennzeichnet, dass** die Schlacke durch Additive auf eine Schlackenbasizität CaO/SiO₂ von 0,6 bis 1,6 eingestellt wird.

8. Verfahren nach Anspruch 7, **dadurch gekennzeichnet, dass** als Additive Stahlwerksschlacke, Walzwerkszunder, Elektroschlackenumschmelzverfahrensschlacken, Hochofenschlacken, Pfannenschlacken, Altglas, Feuerfestausbruch, Kraftwerksflugasche, Gießereialtsand, Müllverbrennungsstäube, getrocknete Hüttenschlämme, kommunale Trockenklärschlämme und/oder Mergelstaub eingesetzt werden.

9. Vorrichtung zur Durchführung eines Verfahrens nach einem der Ansprüche 1 bis 8, **dadurch gekennzeichnet, dass** ein Dosierkonus (3) mit einer Brennerlanze (4) und einer Aufgabeeinrichtung für die Stäube vorgesehen ist, welcher über einen Aufgabebereich mit verringertem Querschnitt über einen die Brennerlanze (4) umgebenden Ringschlitz (41) in einen Diffusor (44) übergeht, dass die Brennkammer (1) an den Diffusor (44) anschließt und dass an eine bodenseitige Austragsöffnung der Brennkammer (1) eine induktiv beheizte Kokssäule als Reduktionsofen (17) angeschlossen ist, dessen kopfseitiges Ende wenigstens einen Anschluss für die Aufgabe von Koks und den Abzug von Kohlenmonoxid und Zn-Dampf aufweist, wobei die Vorrichtung ferner einen Reformer (28), welcher eine Leitung (27) zur Zuführung des am Kopfende des Reduktionsofens (17) als Gas abgezogenen Kohlenmonoxids und Zn-Dampfs aufweist und in den Wasser oder Wasserdampf eindüsbar ist, einen stromabwärts des Reformers (28) angeordneten Filter (32) zur Abscheidung von Zinkoxid sowie eine von dem Filter (32) zu der Brennerlanze (4) führende Leitung (33) aufweist, über welche der Brennerlanze (4) Kohlenmonoxid und Wasserstoff rückführbar sind, wobei zwischen dem Reduktionsofen (17) und dem Reformer (28) ein Heißstaubfänger (25) zur Austragung von Kokspartikeln vorgesehen ist.

10. Vorrichtung nach Anspruch 9, **dadurch gekennzeichnet, dass** der Bereich mit verringertem Querschnitt als rohrförmige Mischkammer (40) ausgebildet ist.

11. Vorrichtung nach Anspruch 9 oder 10, **dadurch gekennzeichnet, dass** die Brennkammer (1) mit sich konisch erweiternden Wänden (2) ausgebildet ist, welche über einen Ringschlitz (41) mit Austragsöffnungen für Verbrennungsgase in Verbindung stehen.

12. Vorrichtung nach Anspruch 9, 10 oder 11, **dadurch gekennzeichnet, dass** der Reduktionsofen (17) zweistufig ausgebildet ist und einen ersten induktiv beheizbaren rohrförmigen Abschnitt (45) mit geringerem Querschnitt aufweist, an welchen am Kopf eine Gasleitung (50) angeschlossen ist, und einen zweiten induktiv beheizbaren Abschnitt (46) mit größerem Querschnitt aufweist, an welchen eine weitere Abgasleitung (51) oberhalb der Schütthöhe der Koksfüllung anschließt.

13. Vorrichtung nach einem der Ansprüche 9 bis 12, **dadurch gekennzeichnet, dass** die Aufgabeeinrichtung als Feststoffeintrag mit einer Förderschnecke (36) und einem die Förderschnecke (36) umgebenden Rohr mit über die Achse des Rohres verteilten Durchbrechungen ausgebildet ist.

14. Vorrichtung nach einem der Ansprüche 9 bis 13, **dadurch gekennzeichnet, dass** der Aufgabebereich zwischen Dosierkonus (3) und Brennkammer (1) in einem ersten Teilbereich als Konfusor (39), in welchem die Brennerlanze (4) unter Ausbildung eines Ringspalts (41) mündet, in einem zweiten Teilbereich als rohrförmige Mischkammer (40) und in einem anschließenden Teilbereich als Diffusor (44) ausgebildet ist.

15. Vorrichtung nach einem der Ansprüche 9 bis 14, **dadurch gekennzeichnet, dass** Sekundärdüsen (61) für Verbrennungssauerstoff, Inertgase und/oder Kohlenmonoxid und/oder Kohlendioxid in radialer Richtung im Aufgabebereich münden.

16. Vorrichtung nach einem der Ansprüche 9 bis 15, **dadurch gekennzeichnet, dass** die Sekundärdüsen (61) in Höhenrichtung versetzt in den Aufgabebereich münden.

## Claims

1. A method for processing metallurgical dusts or grinding dusts, in particular converter dusts and arc furnace dusts from steel or high-grade steel production, in which the dusts are burned and slagged with oxygen in oxidising conditions in a melt burner, **characterised in that** the formed slag is introduced into an inductively heated reduction furnace (17) having a coke bed (49), and **in that** carbon monoxide formed during the reduction of the slag is removed at the top of the reduction furnace (17) as gas along with Zn vapour, whereupon the gas is reformed with water or steam so as to form ZnO and hydrogen and is fed back to the melt burner (1) following separation of the ZnO.

2. The method according to claim 1, **characterised in that** gases for forming a fluid bed are injected into the melt burner (1) at the feed point of the dusts, wherein the dusts are introduced from the fluid bed into the combustion chamber (1) via an annular gap (41) surrounding a burner lance (4).

3. The method according to claim 1 or 2, **characterised in that** the gas removed at the top of the reduction furnace (17) is guided in counterflow to the coke fed to the reduction furnace (17).

4. The method according to claim 1, 2 or 3, **characterised in that** the coke bed (49) of the reduction furnace (17) is heated inductively to temperatures above 1480 °C.

5. The method according to one of claims 1 to 4, **characterised in that** further gas formed in the reduction furnace (17) is removed at a subsequent position different from the top of the reduction furnace (17).

6. The method according to claim 5, **characterised in that** the gas removed at a subsequent point, with use of pyrophoric batches, is fed to the feed point of the dusts into the melt burner (1) via radial nozzles (38).

7. The method according to one of claims 1 to 6, **characterised in that** the slag is adjusted by additives to a slag basicity CaO/SiO₂ from 0.6 to 1.6.

8. The method according to claim 7, **characterised in that** steelmaking slag, rolling mill scale, electro-slag remelting process slags, blastfurnace slags, pan slags, waste glass, refractory rubble, power station fly ash, foundry waste sand, waste incineration dusts, dried flue sludges, communal dry sewage sludge and/or marl dust is/are used as additives.

9. A device for carrying out a method according to one of claims 1 to 8, **characterised in that** a metering cone (3) with a burner lance (4) and a feed arrangement for the dusts is provided, which transitions via a feed region of reduced cross section via an annular slit (41) surrounding the burner lance (4) into a diffuser (44), **in that** the combustion chamber (1) adjoins the diffuser (44), and **in that** an inductively heated coke column is connected as reduction furnace (17) to a base-side discharge opening of the combustion chamber (1), the head-side end of the coke column having at least one connection for the feed of coke and the discharge of carbon monoxide and Zn vapour, wherein the device also has a reformer (28), which has a line (27) for feeding the carbon monoxide and Zn vapour removed as gas at the head end of the reduction furnace (17) and into which water or steam can be injected, a filter (32) arranged downstream of the reformer (28) for separating zinc oxide, and also a line (33) leading from the filter (32) to the burner lance (4), via which line carbon monoxide and hydrogen can be fed back to the burner lance (4), wherein a hot dust catcher (25) is provided between the reduction furnace (17) and the reformer (28) in order to discharge coke particles.

10. The device according to claim 9, **characterised in that** the region of reduced cross section is formed as a tubular mixing chamber (40).

11. The device according to claim 9 or 10, **characterised in that** the combustion chamber (1) is formed with conically widening walls (2), which are connected via an annular slit (41) to discharge openings for combustion gases.

12. The device according to claims 9, 10 or 11, **characterised in that** the reduction furnace (17) is formed in two stages and has a first inductively heatable tubular portion (45) of smaller cross section, to which a gas line (50) is connected at the top, and a second inductively heatable portion (46) or larger cross section, to which a further waste gas line (51) is connected above the bed height of the coke filling.

13. The device according to one of claims 9 to 12, **characterised in that** the feed arrangement is formed as a solids feeder with a conveying screw (36) and a tube surrounding the conveying screw (36) with apertures distributed over the axis of the tube.

14. The device according to one of claims 9 to 13, **characterised in that** the feed region between the metering cone (3) and combustion chamber (1) is formed in a first portion as a converging nozzle (39), in which the burner lance (4) leads so as to form an annular gap (41), is formed in a second portion as a tubular mixing chamber (40), and is formed in an adjoining portion as a diffuser (44).

15. The device according to one of claims 9 to 14, **characterised in that** secondary nozzles (61) for combustion oxygen, inert gases and/or carbon monoxide and/or carbon dioxide lead in the radial direction in the feed region.

16. The device according to one of claims 9 to 15, **characterised in that** the secondary nozzles (61) lead into the feed region in a vertically offset manner.

## Revendications

1. Procédé destiné au retraitement de poussières métallurgiques ou de poussières de meulage, notamment de poussières de transporteurs et de poussières de fours à arc provenant de la production d'acier ou d'acier fin, lors duquel on fait brûler et scorifier les poussières sous des conditions oxydantes dans un brûleur de scorification, **caractérisé en ce qu'**on introduit les scories formées dans un four de réduction (17) chauffé par induction avec du coke en vrac (49) et **en ce qu'**on prélève sous forme de gaz le monoxyde de carbone produit lors de la réduction des scories ensemble avec la vapeur de Zn sur la partie supérieure du four de réduction (17), suite à quoi, on reforme le gaz avec de l'eau ou de la vapeur d'eau en formant du ZnO et de l'hydrogène et après séparation du ZnO, on le recycle vers le brûleur de scorification (1).

2. Procédé selon la revendication 1, **caractérisé en ce qu'**au point de chargement des poussières, on pousse dans le brûleur de scorification (1) des gaz pour former un lit fluidisé, alors que par l'intermédiaire d'une fente annulaire (41) entourant une lance de brûleur (4), on introduit dans la chambre de combustion (1) les poussières issues du lit fluidisé.

3. Procédé selon la revendication 1 ou 2, **caractérisé en ce qu'**on conduit le gaz prélevé dans la partie supérieure du four de réduction (17) dans le contre-courant du coke amené vers le four de réduction (17).

4. Procédé selon la revendication 1, 2 ou 3, **caractérisé en ce qu'**on fait chauffer par induction le coke en vrac (49) du four de réduction (17) à des températures supérieures à 1480 °C.

5. Procédé selon l'une quelconque des revendications 1 à 4, **caractérisé en ce qu'**on prélève du gaz supplémentaire produit dans le four de réduction (17) en un point suivant, différent de la partie supérieure du four de réduction (17).

6. Procédé selon la revendication 5, **caractérisé en ce qu'**on amène le gaz prélevé en un point suivant en utilisant des charges pyrophores vers le point de chargement des poussières dans le brûleur de scorification (1) par l'intermédiaire de buses (38) radiales.

7. Procédé selon l'une quelconque des revendications 1 à 6, **caractérisé en ce qu'**à l'aide d'additifs, on règle les scories à une basicité de scories CaO/SiO₂ de 0,6 à 1,6.

8. Procédé selon la revendication 7, **caractérisé en ce qu'**on utilise en tant qu'additifs des scories d'aciérie, des calamines de laminoir, des scories de procédés de refusion en laitier électriques, des scories de haut fourneau, des scories de poches de coulée, du verre recyclé, des résidus de produits réfractaires, des cendres volantes de centrales électriques, du vieux sable de fonderies, des poussières de l'incinération d'ordures, des boues de fusion séchées, des boues d'épuration communales séchées et/ou de la poussière marneuse.

9. Dispositif destiné à réaliser un procédé selon l'une quelconque des revendications 1 à 8, **caractérisé en ce qu'**il est prévu un cône de dosage (3) avec une lance de brûleur (4) et un système de chargement pour les poussières, qui par l'intermédiaire d'une zone de chargement à section transversale réduite passe dans un diffuseur (44) par l'intermédiaire d'une fente annulaire (41) entourant une lance de brûleur (4), **en ce que** la chambre de combustion (1) se raccorde sur le diffuseur (44) et **en ce que** sur un orifice de sortie du côté du fond inférieur de la chambre de combustion (1) est raccordée en tant que four à réduction (17) une colonne à coke chauffée par induction, dont l'extrémité du côté supérieur comporte au moins un raccord pour le chargement de coke et le prélèvement de monoxyde de carbone et de vapeur de Zn, le dispositif comportant par ailleurs un reformeur (28), lequel comporte un conduit (27) pour amener le monoxyde de carbone et la vapeur de Zn soutirée sous la forme de gaz sur l'extrémité de la partie supérieure du four de réduction (17) et dans lequel on peut injecter de l'eau ou de la vapeur d'eau, un filtre (32) placé en aval du reformeur (28) pour la séparation d'oxyde de zinc, ainsi qu'un conduit (33) menant du filtre (32) vers la lance de brûleur (4), par l'intermédiaire duquel on peut recycler vers la lance de brûleur (4) du monoxyde de carbone et de l'hydrogène, entre le four de réduction (17) et le reformeur (28) étant prévu un collecteur de poussières chaudes (25) pour défourner des particules de coke.

10. Dispositif selon la revendication 9, **caractérisé en ce que** la zone à section transversale réduite est conçue sous la forme d'une chambre de mélange (40) tubulaire.

11. Dispositif selon la revendication 9 ou 10, **caractérisé en ce que** la chambre de combustion (1) est conçue avec des parois (2) s'évasant sous forme conique, qui par l'intermédiaire d'une fente annulaire (41) sont en liaison avec des orifices de sortie pour des gaz de combustion.

12. Dispositif selon la revendication 9, 10 ou 11, **caractérisé en ce que** le four de réduction (17) est conçu à deux étages et comporte une première partie (45) tubulaire pouvant être chauffée par induction avec une section transversale réduite, sur laquelle un conduit de gaz (50) est raccordé en partie supérieure et une deuxième partie (46) pouvant être chauffée par induction, avec une section transversale plus grande, sur laquelle se raccorde un conduit (51) supplémentaire pour les gaz de fumée, au-dessus de la hauteur de déversement du chargement de coke.

13. Dispositif selon l'une quelconque des revendications 9 à 12, **caractérisé en ce que** le système de chargement est conçu sous la forme d'une entrée pour solides avec une vis sans fin (36) et avec un tube entourant la vis sans fin (36) avec des percements distribués sur l'axe du tube.

14. Dispositif selon l'une quelconque des revendications 9 à 12, **caractérisé en ce que** la zone de chargement est conçue entre le cône de dosage (3) et la chambre de combustion (1), dans une première zone partielle en tant que confuseur (39), dans lequel la lance de brûleur (4) débouche en formant une fente annulaire (41), dans une deuxième zone partielle en tant que chambre de mélange (40) et dans une zone partielle s'y raccordant, en tant que diffuseur (44).

15. Dispositif selon l'une quelconque des revendications 9 à 14, **caractérisé en ce que** des buses secondaires (61) pour de l'oxygène de combustion, des gaz inertes et/ou du monoxyde de carbone et/ou du dioxyde de carbone débouchent en direction radiale dans la zone de chargement.

16. Dispositif selon l'une quelconque des revendications 9 à 15, **caractérisé en ce que** les buses secondaires (61) débouchent dans la zone de chargement en étant décalées dans le sens de la hauteur.
